# EUROPÄISCHE PATENTSCHRIFT

(11) **EP 1 076 219 B1**
(45) Veröffentlichungstag und Bekanntmachung des Hinweises auf die Patenterteilung: **08.03.2006**
(21) Anmeldenummer: 00710010.0
(22) Anmeldetag: 01.08.2000
(51) Int. Cl.: F28D 20/00

(54) **Speicheranordnung**
Storage system
Dispositif de stockage

(30) Priorität: 12.08.1999 DE 19937985
(43) Veröffentlichungstag der Anmeldung: 14.02.2001
(73) Patentinhaber: Sailer, Roland, 89601 Schelklingen (DE); Sailer, Wolfgang, 89601 Schelklingen (DE)
(72) Erfinder: Sailer, Roland, 89601 Schelklingen (DE); Sailer, Wolfgang, 89601 Schelklingen (DE)
(74) Vertreter: Weber, Gerhard

(56) Entgegenhaltungen:
- EP-A- 0 861 985
- DE-A- 19 731 351
- PATENT ABSTRACTS OF JAPAN vol. 015, no. 042 (M-1076), 31. Januar 1991 (1991-01-31) -& JP 02 279937 A (SHIMIZU CORP), 15. November 1990 (1990-11-15)

## Beschreibung

Die Erfindung betrifft eine Speicheranordnung mit einer Einschichtvorrichtung für ein Fluid.

Insbesondere bei der Speicherung von solar-thermisch gewonnener Wärme in Speicherbehältern mit einem Fluid als Speichermedium, kann durch Einschichten erwärmten Fluids in eine Fluidschicht gleicher Dichte über eine Vertikale Einschichtvorrichtung mit zeitlich zum umgebenden Fluid wegführenden Auslässen die Ausnutzung der solaren Wärme im Vergleich zum durchmischten Einspeichern verbessert werden. Entsprechendes gilt auch für die Wärmeentnahme aus dem Speicher.

Um das einzuspeichernde, erwärmte Wasser in den Bereich gleicher Dichte zu leiten, wird in DE 39 05 874 C2 ein Steigrohr mit mechanischen Klappenventilen an den seitlichen Öffnungen verwendet. Bei der Einströmung findet nur eine grobe Zuordnung zwischen der Dichte einzuspeicherndes Wasser zur Dichte des Speicherwasser statt, so daß eine teilweise Vermischung stattfindet.

DE 196 08 405 zeigt einen senkrechten Schichtungskanal bestehend aus sich höhenbezogen überlappenden Lamellen. Die Elemente sind an den Ecken eines rechteckigen Speichers oder freistehend als konische Zylinder, die über dünne Ketten miteinander verbunden sind, positioniert. Die Einströmrichtung aus dem Kanal in den Speicher ist durch die höhenbezogen, überlappenden Lamellen in der Art vorgegeben, daß die Strömung nicht horizontal in die naturgemäß horizontal verlaufenden Wärmeschichten im Speicherraum eintritt und somit störende Turbulenzen verursacht.

Ein Steig- beziehungsweise Sinkrohr, das sich vertikal durch den Speicher erstreckt ist in DE 197 31 351 und DE 195 10 293 in unterschiedlichen, gleich beabstandeten Vertikalniveaus mittels Öffnungen zum Steig- beziehungsweise Sinkrohr umgebenden Bereich des Speichers eingeteilt und geöffnet. Die seitlichen Auslässe eines solchen Steigrohrs sind so gestaltet, daß der seitliche Austritt aus der Hauptströmung durch Prallflächen, welche eine Umlenkung seitlich ausströmenden Fluids nach unten bewirken, gebremst wird und die eine, durch Strömungsträgheit und Druck der nachströmenden Fluidsäule verursachten Einströmung kälteren beziehungsweise wärmeren Fluids in Schichten wärmeren beziehungsweise kälteren Fluids verhindert wird. Die Strömungsrichtung an der Öffnung zum Speicher in der Schicht ungefähr gleicher Dichte führt aber zu Turbulenzen und wieder zu einer nachteiligen Störung der Schichtung.

Bekannt ist ferner aus EP 08 61 985 eine Vorrichtung, die in Strömungsrichtung aus dicht aufeinanderfolgenden, beabstandeten Leitelementen besteht. Das Fluid wird, ausgehend von der Hauptströmungsrichtung im Hauptstromkanal, anfänglich in umgekehrte bis schließlich im Wesentlichen horizontale schichtparallele Strömungsrichtung am Ausgang der Ausströmkanäle geführt. Hierbei strömt das erwärmte Fluid in die Schicht mit der annähernd gleichen Dichte.

GM 77 06 061 zeigt ein Einleitungsrohr, das von, mit sich nach unten trichterförmig erweiterten, einen geringen Abstand untereinander aufweisenden, Leitrohren umgeben ist. Jede Öffnung zwischen den Leitrohren stellt eine direkte Verbindung zum umgebenden Speicherwasser dar. Der Wärmeaustausch findet hier direkt mit dem anstehenden Speicherwasser statt. Weiterhin kann nicht ausgeschlossen werden, daß sich Wasser von der Hauptströmungsrichtung abspaltet und infolge Massenträgheit und Dichteverhältnisse im Speicherraum aufsteigt und durch Turbulenzen eine eventuell vorhandene Speicherwasser-Schichtung zerstört.

Ein Wärmespeicher in DE 296 14 764 ist als hydraulische Weiche vorgesehen und zur Einspeicherung von solarer Wärme mit einem Schuppenblech ausgerüstet. Das Schuppenblech ist in seiner Wirkung gleich zu bewerten wie die Formgebung der Leitrohre in GM 77 06 061.

In DE 27 51 265 wird einem Tank über ein Rohr mit seitlichen Öffnungen Wärme zugeführt. Die Öffnungen sind mit seitlichen Rohren, die abwärtsorientiert sind, versehen. Die diskrete Anordnung der Öffnungen ermöglicht nur eine sehr ungenaue Zuführung von Wärme in den Bereich gleicher Dichte. Die Einleitung von erwärmtem Speicherwasser ist nur mit relativ hohen Strömungsgeschwindigkeiten und gerichtet möglich. Die bewegte Verteilung des, in den Speicherbereich, einströmenden erwärmten Wassers horizontal über den gesamten Querschnitt des Speichers ist mit Nachteilen bezüglich des Aufbaus und des Erhalts einer guten Temperaturschichtung verbunden.

Der Erfindung liegt die Aufgabe zugrunde, eine Speicheranordnung mit einer Einschichtvorrichtung für ein Fluid anzugeben, bei welcher die temperaturrichtige und turbulenzarme Einschichtung eines Fluids weiter verbessert ist.

Die Erfindung ist im Patentanspruch 1 beschrieben. Die abhängigen Ansprüche enthalten vorteilhafte Ausgestaltungen und Weiterbildungen der Erfindung.

Wesentliches Element der Erfindung ist, daß durch die Ausbildung wenigstens eines vertikalen Maximums und/oder wenigstens eines vertikalen Minimums im radialen Verlauf der Ausströmkanäle zwischen Hauptströmungskanal und Umgebungsbereich ein direkter horizontaler Strömungsweg vom Hauptströmungskanal zum Umgebungsbereich unterbunden und durch einen gekrümmten Strömungsweg ersetzt wird, in dessen Verlauf ein vertikaler Extrempunkt auftritt. Ein solcher vertikaler Extrempunkt im Verlauf eines Ausströmkanals hat für im Kanal befindliche Fluid-Teilvolumina die Wirkung eines Sifons, wodurch eine Fluidströmung zwischen Hauptstromkanal und Umgebungsbereich zwar nicht verhindert, aber bei unterschiedlicher Dichte zwischen ausströmendem Fluid und umgebender Fluidschicht gebremst wird. Hierdurch wird ein Wärmeaustausch zwischen Fluid im Hauptströmungskanal und Fluid im Umgebungsbereich minimiert und die Gefahr einer nicht temperaturrichtigen Einschichtung vermindert, wogegen für ausströmendes Fluid mit gleicher Dichte wie die umgebende Fluidschicht das Extremum im Verlauf des Ausströmkanals keinen nennenswerten zusätzlichen Strömungswiderstand darstellt.

Das Maximum bzw. Minimum im Verlauf eines Ausströmungskanals bildet einen zum Eintritt des Fluidstroms aus dem Hauptströmungskanal in den Ausströmungskanal und zum Austritt aus dem Ausströmungskanal in den Umgebungsbereich höherliegenden bzw. tieferliegenden Bereich, welcher von ausströmendem Fluid durchflossen werden muß. Bei mehreren abwechselnd aufeinanderfolgenden Maxima und Minima bildet sich ein im vertikalen Querschnitt mäanderförmiger Verlauf des Ausströmungskanals aus.

Das Minimum bzw. Maximum im Verlauf des Ausströmungskanals ist sowohl vom Hauptstromkanal bzw. dem Fluidauslaß aus dem Hauptstromkanal in den Ausströmungskanal als auch von dem Umgebungsbereich des bereits in Temperaturschichtung vorliegenden Speicherfluids, d. h. von den außenliegenden Enden der Ausströmkanäle beabstandet, so daß auf jeden Fall zwischen dem Abströmungskanal und dem Umgebungsbereich seitlich des Maximums bzw. des Minimums im Verlauf des Ausströmungskanals ein aufsteigender und ein absteigender Abschnitt des Ausströmkanals vorliegt. Vorzugsweise münden die Ausströmkanäle in ihren dem Hauptströmungskanal abgewandten Auslässen zumindest annähernd horizontal in den Umgebungsbereich, so daß eine horizontale Einströmung des einzuspeichernden Fluids in die vorliegende Schichtung und damit eine turbulenzarme Einströmung gewährleistet ist. Die Ausströmkanäle sind vorteilhafterweise als den Hauptstromkanal über einen Winkel um dessen Mittelachse von wenigstens 90° umgebende, sich radial erweiternde Segmente oder vorzugsweise als den Hauptströmungskanal vollständig umgebende Ausströmbereiche ausgebildet. Die Höhe der Ausströmkanäle ist im wesentlichen in radialer Richtung gleichbleibend. Durch eine seitliche radiale Aufweitung der Ausströmkanäle verringert sich die Strömungsgeschwindigkeit des ausströmenden Fluids von den Einlässen auf der Seite des Hauptströmungskanals zu den Auslässen am Umgebungsbereich hin kontinuierlich, so daß einer solchen Gestaltung der Ausströmkanäle eine strömungsberuhigende Funktion zukommt. Eine Strömungsberuhigung kann unterstützt werden, indem die dem Umgebungsbereich zugewandten Abschnitte über eine bestimmte Strekke, welche vorzugsweise wenigstens ein Viertel, insbesondere wenigstens ein Drittel der radialen Erstreckung der Ausströmkanäle ausmacht, als horizontale Kanalabschnitte ausgeführt sind. Das Maximum bzw. Minimum ist bevorzugt in der Nähe des Hauptströmungskanals angeordnet, so daß bei gegebenen Au-ßenmaßen der Einschichtvorrichtung für die Strömungsberuhigung vor der Einströmung in den Umgebungsbereich ein hinreichend langer Abschnitt der Ausströmkanäle gegeben ist.

Die Ausströmkanäle sind vorteilhaft durch vertikal übereinander angeordnete, vorzugsweise gleich ausgebildete Trennstellen vertikal voneinander getrennt, wobei die oberen und unteren Wandungen der Trennstellen zugleich die vertikal begrenzenden Flächen der Ausströmkanäle bilden. Zur Ausbildung eines Maximums oder Minimums können diese begrenzenden Flächen der Trennstellen bspw. gekrümmt ausgebildet sein, im vertikalen Querschnitt dabei insbesondere in radialer Richtung wellenförmig mit Kreisbögen, Sinusbögen oder dgl. verlaufen. Eine andere vorteilhafte Ausführung sieht vor, daß die Trennstellen als im wesentlichen ebene Scheiben ausgebildet sind und daß von den Scheibenflächen vertikale Stege abstehen, wobei die von vertikal gegenüberliegenden Begrenzungsflächen eines Ausströmkanals abstehenden Stege wechselseitig radial versetzt liegen und so wenigstens ein Minimum und/oder ein Maximum bilden. Die Wandstärke der Trennstellen kann zwischen 0,5 mm und 50 mm liegen. Die Wandstärke der Trennstellen ist vorzugsweise gering gegen die Höhe der Ausströmkanäle. Die Trennstellen sind vorzugsweise rotationssymmetrisch um die Zentralachse des Hauptströmungskanals ausgeführt.

Das Material der Trennstellen ist vorzugsweise gering wärmeleitend so daß bei vertikal übereinanderliegenden Ausströmkanälen, welche im Regelfall Fluid unterschiedlicher Dichte und Temperatur führen, kein Wärmeausgleich stattfindet. Eine geringe Wärmeleitfähigkeit der Trennstellen gewährleistet in Verbindung mit einer geringen Wärmeleitfähigkeit des Speicherfluids eine gute thermische Trennung zwischen Hauptstromkanal und Umgebungsbereich.

Die Trennstellen sind gemäß einer bevorzugten Ausführung als einzelne, zu der Einschichtvorrichtung zusammengefügte Sifonelemente ausgebildet, welche insbesondere alle gleich geformt sein können. Die mehreren Sifonelemente können für die Bildung einer säulenförmigen Einschichtvorrichtung Abstands- und Befestigungselemente zum Zusammenbau ohne Hilfskonstruktion aufweisen und bspw. rastend zusammensteckbar sein. Eine andere Ausführungsform sieht vor, daß die Sifonelemente wenigstens drei um gleiche Winkel versetzte Bohrungen, insbesondere in ihrem äußeren Bereich, aufweisen und Stäbe, Gewindestangen oder dgl. durch die Bohrungen der Sifonelemente geführt sind. Die Einstellung definierter Abstände zwischen den Sifonelementen kann durch Distanzhülsen auf den Stäben oder durch Muttern auf Gewindestangen vorgenommen sein. Die Sifonelemente können ferner durch eine an den Rändem der Sifonelemente ansetzende Hilfskonstruktion fixiert und auf Abstand gehalten sein. Die genannten verschiedenen Elemente zum Aufbau einer Einschichtvorrichtung aus den Sifonelementen bestehen vorzugsweise aus demselben Material wie die Sifonelemente selbst. Die Sifonelemente können insbesondere scheibenförmig ausgeführt sein, wobei die Scheiben zur Ausbildung eines Maximums und/oder Minimums im radialen Verlauf der Ausströmkanäle bspw. wie beschrieben radial wellenförmig gekrümmt oder als ebene Scheiben mit ringförmigen vertikalen Stegen ausgebildet sein können.

Vorteilhafterweise ist eine Wärmequelle oder Wärmesenke, bspw. in Form eines Wärmetauschers, mit der Einschichtvorrichtung derart gekoppelt, daß durch Erwärmung oder Abkühlung des Fluids um das Wärmetauscherelement ein Fluidstrom erzeugbar und direkt in den Hauptströmungskanal einleitbar ist. Die erfindungsgemäße Anordnung ist sowohl für aufsteigende als auch für absinkende Fluidströme im Abströmungskanal einsetzbar. Die beschriebene vorteilhafte Wirkung tritt sowohl bei Ausbildung eines Maximums als auch bei Ausbildung eines Minimums in den Ausströmungskanälen auf. Vorzugsweise sind sowohl wenigstens ein Minimum und wenigstens ein Maximum abwechselnd nacheinander im Verlauf der Ausströmungskanäle vorgesehen. Die abwechselnden Minima und Maxima sind vorzugsweise dicht aufeinanderfolgend und näher beim Hauptströmungskanal als beim Umgebungsbereich angeordnet. Die Erfindung ist nachfolgend anhand von bevorzugten Ausführungsbeispielen und Bezugnahme auf die Abbildungen noch eingehend erläutert. Dabei zeigt:
- Fig. 1, 2: einen Ausschnitt aus einer Einschichtvorrichtung mit einem radialen Maximum bzw. Minimum
- Fig. 3: eine Draufsicht auf ein Sifonelement nach Fig. 1 oder 2
- Fig. 4, 5, 6, 7: einen Ausschnitt aus einer Einschichtvorrichtung mit einem Maximum und einem Minimum im radialen Verlauf der Ausströmkanäle
- Fig,8, 9: einen Ausschnitt aus einer Einschichtvorrichtung mit radial gewellten Sifonelementen
- Fig. 10: eine erste Speicheranordnung mit mehreren Einschichtvorrichtungen und Wärmetauscheranordnungen
- Fig. 11: eine weitere Speicheranordnung mit mehreren, direkt extern fluidgespeisten Einschichtvorrichtungen

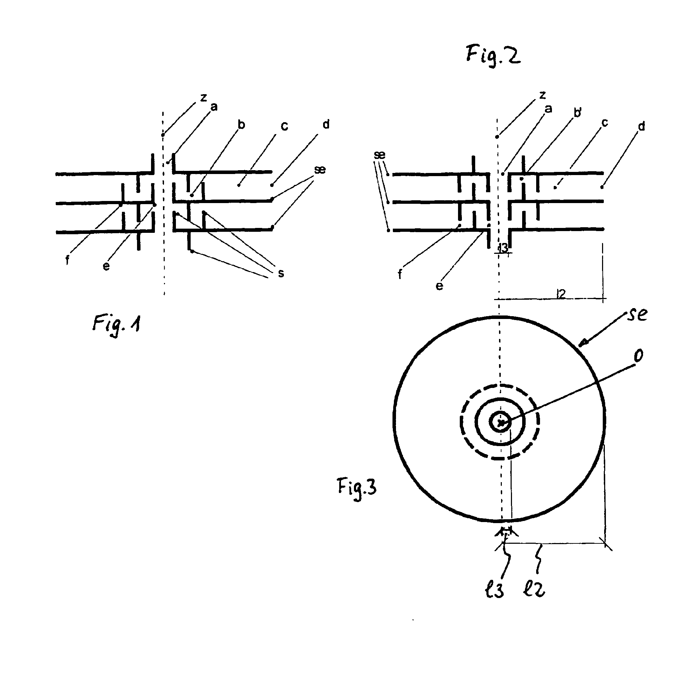

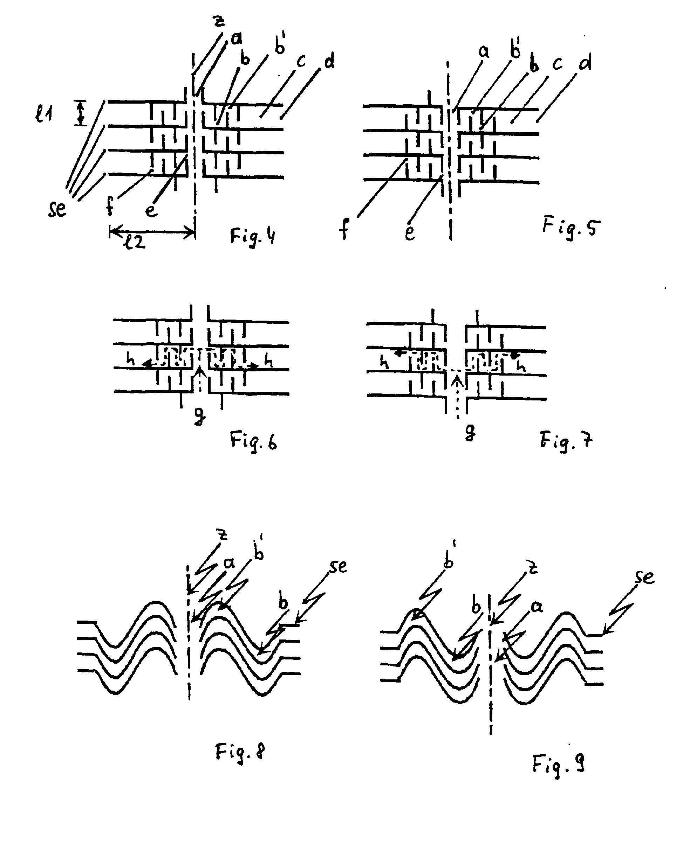

In Fig.1 und Fig. 2 sind mehrere in vertikaler Richtung aufeinanderfolgende Sifonelemente (se) skizziert, die rotationssymmetrisch ausgebildet und konzentrisch zu einer vertikalen Kanalachse (z) eines Hauptströmungskanals angeordnet sind. Die Sifonelemente bestehen in ihrer einfachsten Form aus einer Scheibe mit einer inneren Öffnung (o), die den vertikalen Hauptströmungskanal (a) begrenzt. Die Stege (s) sind bei den Sifonelementen (se) so angeordnet, daß sich bei der Kombination mehrerer, mindestens zweier Sifonelemente ein sich darin einschließender Sifon (b oder b') bildet. Die Ausprägung des Sifons (b, b') ist nicht zwingenderweise in unmittelbarer Nähe des Hauptströmungskanals (a) erforderlich. Der Radius (I3) der Öffnung (o), der Abstand der Sifonelemente (I1) und der Außenradius der Sifonelemente (I2) kann entsprechend dem zu erwartenden Fluidstrom im Hauptströmungskanal dimensioniert werden. Die Sifonelemente haben gegenüber der Höhe der Ausströmkanäle der Vorrichtung eine geringe Wandstärke, so daß das durch die Vorrichtung beanspruchte Volumen nahezu vollständig für die Fluidströmung zur Verfügung steht. Die Wandstärke richtet sich nach den statischen Erfordernissen und liegt vorteilhafterweise im Bereich 0,5 mm bis 50 mm. Je größer der Radius I2 ist, um so störungsärmer, also laminar, horizontal und mit geringer Strömungsgeschwindigkeit strömt dann das Fluid in den umgebenden Speicherbereich in die Schicht äquivalenter Dichte. Fig.1 und Fig. 2 unterscheiden sich dadurch, daß Fig. 1 einen Sifon b ausprägt für Fluide höherer Dichte und Fig. 2 einen Sifon ausprägt für Fluide geringerer Dichte aufweist. Grundsätzlich ist die Hauptströmungsrichtung in den Vorrichtungen aus Fig.1 und Fig. 2 entweder vertikal steigend oder fallend frei wählbar. Den Vorrichtungen nach Fig. 1 und Fig. 2 kann die Hauptströmungsrichtung im Hauptströmungskanal (a) frei zugeordnet werden.

Die in Fig. 1 und Fig. 2 skizzierte Vorrichtung weist ausgehend von der zentralen Achse des Hauptströmungskanals im wesentlichen drei unterschiedliche radiale Abschnitte auf. Ein erster Abschnitt bis zum Radium I3 bildet den Hauptströmungskanal a zur Führung des einzuschichtenden vertikalen Fluidstroms. Ein zweiter Abschnitt b bzw. b' wirkt als Trennbereich und entkoppelt den Fluidstrom im Hauptströmungskanal a von dem die Einschichtvorrichtung umgebenden geschichteten Speicherfluid. Ein dritter Abschnitt c, d bildet eine Beruhigungs- und Einströmzone und begünstigt eine verwirbelungsarme Einleitung des aus dem Hauptstromkanal über die zwischen den Sifonelementen se ausgebildeten Ausströmkanäle in das umgebende geschichtete Speicherfluid.

Der Hauptströmungskanal (a) weist vertikal, idealerweise gleich beabstandet und über den gesamten Umfang des Hauptströmungskanals sich erstreckende seitliche Öffnungen e als Einlässe in die Ausströmkanäle auf.

Der zweite Abschnitt (b; b'), als erfindungsgemäß wesentliche Komponente, hat als thermischer Entkoppelbereich und Trennbereich die Aufgabe, das auf- oder abströmende Fluid im Hauptströmungskanal (a) vom umgebenden Speicherbereich auf Grund der Schwerkraft und ohne bewegliche Mechanik zu trennen. Die erfindungsgemäße Ausbildung wenigstens eines vertikalen Maximums b' und/oder Minimums b im radialen Verlauf der Ausströmkanäle für zur Entstehung wenigstens eines Sifons im zweiten Abschnitt, wobei mindestens ein Sifontyp, entweder für Fluid höherer Dichte (b) zum Beispiel Kaltwasser oder Fluid geringerer Dichte (b') zum Beispiel Warmwasser realisiert ist.

Ein Sifon für Fluide mit höherer Dichte ist eine Fluidführung (b) vom Hauptstromkanal zum umgebenden Speicherfluid, die bewirkt, daß Fluide mit höherer Dichte in einem Kanal oder einem Sifonsystem einen, zum Ein- und Austritt des Sifonsystems, höhenbezogen tiefer liegenden Bereich vorfinden, der aufgrund der Schwerkraft bewirkt, daß sich ein Fluid mit höherer Dichte dort sammelt. Fließt in diesen Sifonbereich ein Fluid mit höherer Dichte, im Vergleich zur Dichte der Fluide der Umgebung, ein, so bewirkt dies einen Verschluß durch ein durch Schwerkraft verursachtes Absinken des Fluids im vorgegebenen Sifonbereich.

Ein Sifon für Fluide mit geringerer Dichte ist eine Fluidführung (b') vom Hauptstromkanal zum umgebenden Speicherfluid, die bewirkt, daß Fluide mit geringerer Dichte in einem Kanal oder einem Sifonsystem einen zum Ein- und Austritt des Sifonsystems höhenbezogen höherliegenden Bereich vorfinden, der aufgrund der Schwerkraft bewirkt, daß sich ein Fluid mit geringerer Dichte dort sammelt. Fließt in diesen Sifonbereich ein Fluid mit geringerer Dichte, im Vergleich zur Dichte der Fluide der Umgebung, ein, so bewirkt dies einen Verschluß durch ein durch Schwerkraft verursachtes Aufsteigen des Fluids im vorgegebenen Sifonbereich.

Der dritte Abschnitt (c, d) ist vorteilhaft als Beruhigungs- (c) und Einströmzone (d) des Fluids in den umgebenden Speicherbereich ausgebildet. Hier wird das Fluid in seiner Strömungsgeschwindigkeit durch den vorteilhaft radial zunehmenden Strömungsquerschnitt weiter stark verlangsamt und laminar und horizontal in die Schicht äquivalenter Dichte eingeleitet.

Bevorzugt ist eine rotationssymmetrische Ausbildung der Vorrichtung wie aus Fig. 3 ersichtlich. Das in den Sifonen stehende, schlecht wärmeleitende Fluid wirkt dann als rohrzylindrische Wärmeisolationsschicht zwischen dem Fluid im Hauptströmungskanal und den umgebenden Fluidschichten anderer Dichte.

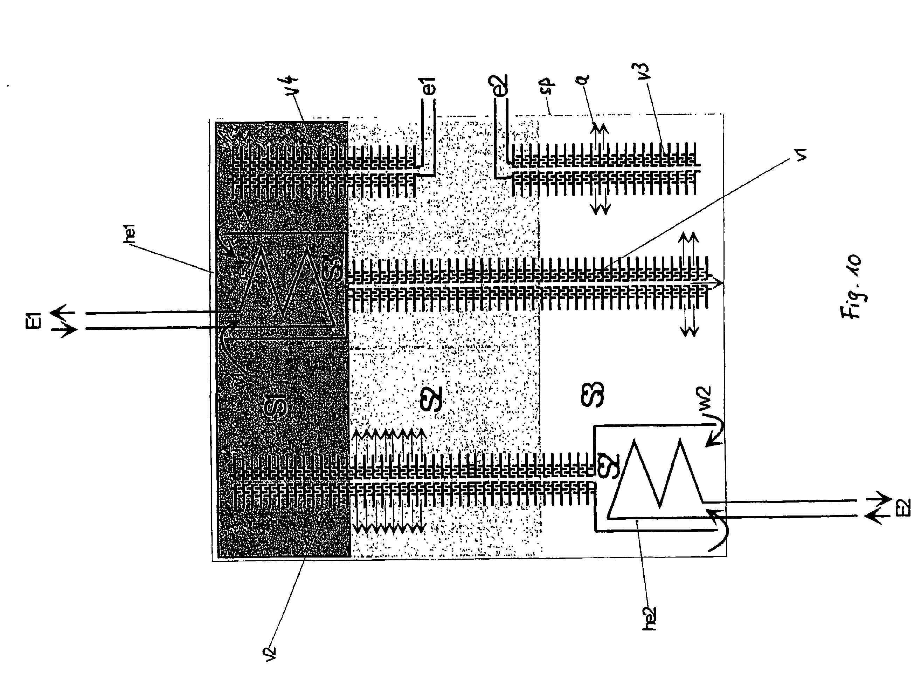

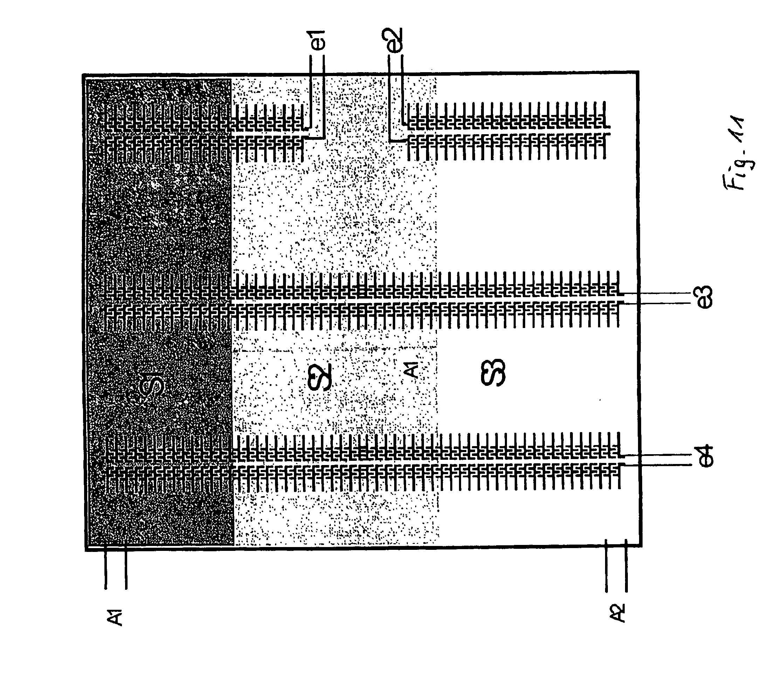

Eine dichteäquivalente Zuordnung vom Fluid im Hauptströmungskanal (a) und dem Fluid im Speicher (beispielsweise S1, S2, S3 in Fig. 10, 11) ist durch den im Mittel horizontalen Durchtritt des Fluids durch den zweiten Abschnitt (b, b') der Einschichtvorrichtung möglich. Höhenbezogen kann somit das einzuspeichernde Fluid in der vertikalen Position dem Speicherbereich zugeleitet werden, in der es auch aus dem Hauptströmungskanal austritt. Sind mehrere Sifone abwechselnd nacheinander zu durchströmen, so kann auch eine geringe höhenbezogene Abweichung möglich sein (Fig. 4 bis Fig. 6).

Die Ausführungsform nach Fig. 4 und Fig. 5 unterscheidet sich von der Ausführungsform nach Fig. 1 und Fig. 2 dadurch, daß ein weiterer Sifon mit komplementärer Wirkung in der Strömungsrichtung vom Hauptströmungskanal in den Speicherbereich folgt. Ein vom Hauptströmungskanal (a) in den Speicherbereich austretendes Fluid muß immer mindestens einen Sifon für Fluide mit höherer Dichte (b) und ein Sifon für Fluide mit einer geringeren Dichte (b') durchlaufen. Die Reihenfolge ist, entsprechend Fig. 6 und Fig. 7, hierbei unerheblich. Es können weitere Maxima und Minima als Sifone abwechselnd bestimmungsgemäß für Fluide mit höherer Dichte und für Fluide mit geringerer Dichte aufeinander folgen, um eine weitere Trennung zwischen strömendem Fluid im Hauptströmungskanal (a) und umgebendem Fluid im Speicherbereich zu erhalten.

In Fig. 8 und Fig. 9 weisen die Sifonelemente einen kontinuierlichen Kurvenverlauf im Abschnitt 2 (b, b') auf. Der Kurvenverlauf der Sifonelemente unterstützt die laminare Strömung des Fluids bereits in den Sifonbereichen (b; b'). Die Sifonbereiche entstehen wieder durch die vertikale Aneinanderreihung mehrerer gleicher Sifonelemente (se).

Fig. 10 zeigt schematisch eine Anordnung mit vier erfindungsgemäßen Vorrichtungen in einem Speicherbehälter (sp), wobei die Vorrichtung v2 und v4 für steigende und v1 und v3 für fallende Volumenströme vorgesehen sind. Der Speicherbehälter (sp) kann eine beliebige Form haben und beispielsweise als zylindrischer Tank ausgebildet sein mit einer Höhe, die vorzugsweise größer ist als der Durchmesser des Tanks. Auch viereckige Querschnitte sind möglich und die oberen und unteren Endwände können eben oder gewölbt sein. Die Einschichtvorrichtung (v2) wird von einem, durch ein am Heizelement (he2), welches vorteilhafterweise ein von einem erwärmten Fluid E2 durchströmter Wärmetauscher ist, auf eine Temperatur mit der Dichte (s2') erhitztes Fluid (w2) vertikal im Hauptströmungskanal (a) aufsteigend durchflossen. Weist der Speicher (sp) eine Dichteschichtung eines Fluids entsprechend Dichte Fluid S1<Dichte Fluid S2 < Dichte Fluid S3 auf, so steigt es bis maximal an die Schichtgrenze zum Fluid mit der Dichte S1 auf. Im Speicherbereich mit der Dichte S3 findet keine Einströmung von im Hauptstromkanal befindlichen Fluids in den umgebenden Speicherbereich oder umgekehrt statt, da hierbei, ausgehend vom Hauptstromkanal zum umgebenden Speicherbereich zuerst das Sifon für Fluide mit höherer Dichte durchströmt werden müßte. Da nun das Sifon für das aufsteigende Fluid S2' eine Sperre darstellt, ist die Ausströmung physikalisch nicht möglich. Einströmen vom Fluid des umgebenden Speicherbereichs mit der Dichte S3 ist physikalisch ebenfalls nicht möglich, da hier in der Strömungsrichtung Speicherbereich zum Hauptströmungskanal zuerst ein Sifon für Fluide mit höherer Dichte durchströmt werden müßte. Das Fluid S2' wird aufgrund der Dichteunterschiede bis in den Speicherbereich äquivalenter Dichte bewegt, dort ist die Wirksamkeit des dichteabhängigen Verschlusses der konstruktiven Sifone außer Kraft. Bei Dichtegleichheit zwischen Fluid im Hauptströmungskanal und umgebenden Speicherbereich fließt das Fluid, ausschließlich durch den Strömungswiderstand der Sifonelemente gebremst, laminar, mit geringer Geschwindigkeit und horizontal in die naturgemäß horizontale Schicht äquivalenter Dichte vom Hauptströmungskanal in den umgebenden Speicherbereich. Ein Aufsteigen des Fluids S2' in den Bereich der Dichte S1 ist nicht möglich, da in diesem Bereich das Fluid S2' einen negativen Auftrieb erführe.

Wird das Fluid (w1) durch das Kühlelement (he1), welches vorteilhafterweise ein von einer kühlen Flüssigkeit E1, z. b. Frischwasser durchströmter Wärmetauscher ist, abgekühlt, strömt es mit der Dichte S3' vertikal sinkend in den Hauptströmungskanal der Vorrichtung (v1). Das im Hauptströmungskanal sinkende Fluid S3' ist analog zur Situation in (v2) im Bereich des Fluids des umgebenden Bereichs mit der der Dichte S2 getrennt geführt, da im Bereich S2 vom Hauptströmungskanal zum umgebenden Speicherbereich zuerst ein Sifon für Fluide höherer Dichte als Sperre für das sinkende Fluid mit der Dichte S3' wirkt. Der Eintritt von Fluid S1 in den Hauptströmungskanal ist physikalisch ebenfalls nicht möglich, da hier ein Sifon für Fluide mit höherer Dichte durchströmt werden müßte. Das Fluid strömt im Bereich äquivalenter Dichte in den umgebenden Speicherbereich.

Die Vorrichtungen (v4) und (v3) werden über die Öffnungen (e1) bzw.(e2) gespeist. Das beispielsweise durch externe Wärmequellen oder Wärmesenken eingeleitete Fluid wird mittels den Vorrichtungen (v4) und (v3) störungsarm in den Speicher eingetragen. Die Entnahme von Speicherwasser ist ebenfalls durch die Vorrichtungen (v4) und (v3) möglich. Hierbei kann an der Öffnung (e1) Speicherfluid über die untersten Sifonelemente von (v4) und an der Öffnung (e2) Speicherfluid über die obersten Sifonelemente von (v3) abgezogen werden.

Ein Speicher nach Fig. 11 wird ausschließlich von außerhalb des Speichers angeordneten Wärmequellen und Wärmesenken mit Fluid gespeist. Beispielsweise können externe Plattenwärmetauscher die Wärmeenergie von Fernwärmenetzen und Solaranlagen oder Heizkesseln dem Speicher energiebehaftete Volumenströme, die dichteabhängig eingeschichtet werden sollen, zuführen.

Für den Aufbau der Vorrichtung mit einer Mehrzahl von Sifonelementen können die Sifonelemente bereits selbst Abstands- und Befestigungselemente zum Zusammenbau ohne Hilfskonstruktionen aufweisen. Diese können sowohl als lösbare, als auch unlösbare Verbindungen ausgestaltet sein. Es kann jedoch auch eine zentrale und/oder eine am äußeren Rand ansetzende Trägerkonstruktion, welche jedoch die Fluidströmung nicht nennenswert behindern soll, zur Halterung der Sifonelemente eingesetzt werden. Beispielsweise können drei um 120° versetzte Gewindestangen mit Distanzhülsen, die entweder bereits mit dem Sifonelement verbunden sind, oder als Einzelelemente ergänzt werden, durch drei Öffnungen im äußeren Sifonelementbereich geführt, zur Fixierung aller Elemente einer Vorrichtung verwendet sein. Die Abstands- und Befestigungselemente und Konstruktionen sind vorteilhaft aus dem gleichen Material realisiert, wie die Sifonelemente selbst.

Die Sifonelemente sind vorteilhaft aus schlecht wärmeleitendem Material ausgestaltet. Die Vorrichtung kann aus einzelnen Sifonelementen oder aber auch als Ganzes gefertigt sein.

Die mit der Erfindung erzielten Vorteile bestehen insbesondere darin, daß unter Ausnutzung der Schwerkraft eine getrennte Führung von Fluiden mit unterschiedlichen Dichten möglich ist. Der Trenneffekt kann nahezu beliebig verstärkt werden, dadurch, daß eine Vielzahl der erfindungsgemäßen Sifone durch die Sifonelemente ausgeprägt sind, die vom Hauptströmungskanal (a) in Richtung umgebenden Speicherbereich und umgekehrt vom Fluid zu durchströmen sind. Die Erfindung ermöglicht weiterhin eine Zuführung von einem Fluid im Hauptströmungskanal (a) mit einer bestimmten Dichte in die Schicht des umgebenden Speicherfluids mit der äquivalenten Dichte. Hierbei ist die Zuordnung besonders exakt, da der Austritt aus dem Hauptströmungskanal (e) und der Austritt in den umgebenden Speicherbereich (d) im Wesentlichen höhenbezogen gleich ist. Hieraus ergibt sich ein besonders störungsarmer Eintrag von Fluiden in den Speicherbereich, der noch unterstützt wird durch den sich radial vergrößernden Einströmungsquerschnitt und den richtungsweisenden Einströmbereich (c; d). Die Fließrichtung im Hauptströmungskanal (a) kann beliebig sein. Die Erfindung beinhaltet keine mechanisch beweglichen Teile, ist somit nicht wartungsanfällig und benötigt keine elektronische Einrichtung zur Steuerung und Regelung. Die Erfindung ist grundsätzlich in Verbindung von jeder Art von Fluiden einsetzbar. Die Einsatzbereiche erstrecken sich beispielsweise auf die Heizungs- und Solartechnik. Hierbei können Behälter und Speicher in jeder Größenordnung unter Druck stehend oder drucklos bedient werden. Insbesondere ist der Einsatz in großen Jahres- oder Saisonalspeichern vorteilhaft.

## Patentansprüche

1. Speicheranordnung mit einer in einem ein Fluid enthaltenden Speicherbehälter angeordneten Einschichtvorrichtung, welche einen vertikalen Hauptströmungskanal und einen diesen umgebenden Trennbereich zum umgebenden Fluid bildet und eine Mehrzahl vertikal unterschiedlich positionierter Ausströmungskanäle durch den Trennbereich zur dichteabhängigen Einschichtung eines Fluidstroms aus dem Hauptströmungskanal in das umgebende Fluid aufweist, **dadurch gekennzeichnet, daß** die Ausströmungskanäle im radialen Verlauf zwischen Hauptströmungskanal und Umgebungsbereich und von diesen beabstandet wenigstens ein vertikales Maximum und/oder wenigstens ein vertikales Minimum aufweisen.

2. Anordnung nach Anspruch 1, **dadurch gekennzeichnet, daß** die Ausströmkanäle horizontal in den Umgebungsbereich münden.

3. Anordnung nach Anspruch 1 oder Anspruch 2, **dadurch gekennzeichnet, daß** die die Ausströmkanäle vertikal begrenzenden Flächen radial gekrümmt sind.

4. Anordnung nach Anspruch 1 oder Anspruch 2, **dadurch gekennzeichnet, daß** die die Ausströmkanäle vertikal begrenzenden Flächen vertikal abstehende Stege zur Bildung eines Maximums und/oder Minimums im radialen Verlauf eines Ausströmkanals aufweisen.

5. Anordnung nach einem der Ansprüche 1 bis 4, **dadurch gekennzeichnet, daß** die Ausströmkanäle zwischen vertikal aufeinanderfolgenden Trennstellen ausgebildet sind.

6. Anordnung nach Anspruch 5, **dadurch gekennzeichnet, daß** die vertikale Wandstärke der Trennstellen gering ist gegen die Höhe der Ausströmkanäle.

7. Anordnung nach Anspruch 5 oder 6, **dadurch gekennzeichnet, daß** die vertikale Wandstärke der Trennstellen 0,5 mm bis 50 mm beträgt.

8. Anordnung nach einem der Ansprüche 5 bis 7, **dadurch gekennzeichnet, daß** die Trennstellen rotationssymmetrisch um den Hauptströmungskanal ausgebildet sind.

9. Anordnung nach einem der Ansprüche 5 bis 8, **dadurch gekennzeichnet, daß** die Trennstellen durch vertikal aufeinanderfolgend verbundene Sifonelemente gebildet sind.

10. Anordnung nach Anspruch 9, **dadurch gekennzeichnet, daß** an den Sifonelementen Abstands- und Befestigungselemente zum Zusammenbau ohne Hilfskonstruktion vorhanden sind.

11. Anordnung nach Anspruch 9, **dadurch gekennzeichnet, daß** wenigstens drei um gleiche Winkel versetzte Gewindestangen durch Bohrungen durch die Sifonelemente in deren äußerem Bereich geführt und die Sifonelemente durch Distanzhülsen oder Muttern auf Abstand gehalten sind.

12. Anordnung nach Anspruch 9, **dadurch gekennzeichnet, daß** die Sifonelemente durch eine an deren Rand ansetzende Hilfskonstruktion fixiert und auf Abstand gehalten sind.

13. Anordnung nach einem der Ansprüche 10 bis 12, **dadurch gekennzeichnet, daß** die Elemente zur gegenseitigen Verbindung der Sifonelemente aus demselben Material wie die Sofinelemente bestehen.

14. Anordnung nach einem der Ansprüche 5 bis 13, **dadurch gekennzeichnet, daß** die Trennstellen scheibenförmig ausgebildet sind.

15. Anordnung nach einem der vorhergehenden Ansprüche, **dadurch gekennzeichnet, daß** eine Wärmequelle oder Wärmesenke mit der EinschichtVorrichtung derart gekoppelt ist, daß ein in den Hauptströmungskanal geführter Fluidstrom erzeugbar ist.

## Claims

1. Storage system comprising a layering device arranged in a fluid-containing storage container, this layering device forming a vertical main flow duct and, surrounding the latter, a separating region with respect to the surrounding fluid and having a plurality of vertically differently positioned outflow ducts through the separating region for the density-dependent layering of a fluid stream from the main flow duct into the surrounding fluid, **characterized in that** the outflow ducts have at least one vertical maximum and/or at least one vertical minimum in the radial extension between the main flow duct and the surrounding region and at a distance therefrom.

2. System according to Claim 1, **characterized in that** the outflow ducts open horizontally into the surrounding region.

3. System according to Claim 1 or Claim 2, **characterized in that** the surfaces delimiting the outflow ducts vertically are curved radially.

4. System according to Claim 1 or Claim 2, **characterized in that** the surfaces delimiting the outflow ducts vertically have vertically projecting fins for the formation of a maximum and/or minimum in the radial extension of an outflow duct.

5. System according to one of Claims 1 to 4, **characterized in that** the outflow ducts are formed between vertically successive separating points.

6. System according to Claim 5, **characterized in that** the vertical wall thickness of the separating points is small in relation to the height of the outflow ducts.

7. System according to Claim 5 or 6, **characterized in that** the vertical wall thickness of the separating points is 0.5 mm to 50 mm.

8. System according to one of Claims 5 to 7, **characterized in that** the separating points are formed with rotational symmetry about the main flow duct.

9. System according to one of Claims 5 to 8, **characterized in that** the separating points are formed by siphon elements connected in vertical succession.

10. System according to Claim 9, **characterized in that** spacer and fastening elements are present on the siphon elements for assembly without an auxiliary structure.

11. System according to Claim 9, **characterized in that** at least three threaded rods offset by the same angle are guided through bores through the siphon elements in the outer region thereof and the siphon elements are kept apart by means of spacer sleeves or nuts.

12. System according to Claim 9, **characterized in that** the siphon elements are fixed and kept apart by means of an auxiliary structure to be mounted at the edge thereof.

13. System according to one of Claims 10 to 12, **characterized in that** the elements for connecting the siphon elements to one another consist of the same material as the siphon elements.

14. System according to one of Claims 5 to 13, **characterized in that** the separating points are disc-shaped.

15. System according to one of the preceding claims, **characterized in that** a heat source or heat sink is coupled to the layering device in such a way that it is possible to produce a fluid stream which is guided into the main flow duct.

## Revendications

1. Arrangement d'accumulation comprenant un dispositif d'homogénéisation disposé dans un récipient d'accumulation contenant un fluide, lequel forme un canal d'écoulement principal et une zone de séparation qui entoure celui-ci par rapport au fluide environnant et présente une pluralité de canaux de sortie à travers la zone de séparation pour l'homogénéisation en fonction de la densité d'un courant de fluide provenant du canal d'écoulement principal dans le fluide environnant, **caractérisé en ce que** les canaux de sortie présentent au moins un maximum vertical et/ou au moins un minimum vertical dans le tracé radial entre le canal d'écoulement principal et la zone environnante et espacé(s) de ceux-ci.

2. Arrangement selon la revendication 1, **caractérisé en ce que** les canaux de sortie débouchent horizontalement dans la zone environnante.

3. Arrangement selon la revendication 1 ou la revendication 2, **caractérisé en ce que** les surfaces qui délimitent verticalement les canaux de sortie sont courbées dans le sens radial.

4. Arrangement selon la revendication 1 ou la revendication 2, **caractérisé en ce que** les surfaces qui délimitent verticalement les canaux de sortie présentent des nervures reposant dans le sens vertical pour former un maximum et/ou un minimum dans le tracé vertical d'un canal de sortie.

5. Arrangement selon l'une des revendications 1 à 4, **caractérisé en ce que** les canaux de sortie sont formés entre des points de séparation qui se succèdent dans le sens vertical.

6. Arrangement selon la revendication 5, **caractérisé en ce que** l'épaisseur des parois verticales des points de séparation est faible par rapport à la hauteur des canaux de sortie.

7. Arrangement selon la revendication 5 ou 6, **caractérisé en ce que** l'épaisseur des parois verticales des points de séparation est comprise entre 0,5 mm et 50 mm.

8. Arrangement selon l'une des revendications 5 à 7, **caractérisé en ce que** les points de séparation sont formés avec une symétrie rotationnelle autour du canal d'écoulement principal.

9. Arrangement selon l'une des revendications 5 à 8, **caractérisé en ce que** les points de séparation sont formés par des éléments siphons reliés successivement entre eux dans le sens vertical.

10. Arrangement selon la revendication 9, **caractérisé en ce qu'**il existe au niveau des éléments siphons des éléments d'espacement et de fixation pour un assemblage sans construction auxiliaire.

11. Arrangement selon la revendication 9, **caractérisé en ce qu'**au moins trois tiges filetées décalées du même angle sont passées à travers des trous dans les éléments siphons dans leur zone extérieure et les éléments siphons sont maintenus espacés par des douilles d'écartement ou des écrous.

12. Arrangement selon la revendication 9, **caractérisé en ce que** les éléments siphons sont fixés et maintenus espacés par une construction auxiliaire reposant au niveau de leur bord.

13. Arrangement selon l'une des revendications 10 à 12, **caractérisé en ce que** les éléments destinés à la liaison mutuelle des éléments siphons se composent du même matériau que les éléments siphons.

14. Arrangement selon l'une des revendications 5 à 13, **caractérisé en ce que** les points de séparation sont réalisés en forme de disque.

15. Arrangement selon l'une des revendications précédentes, **caractérisé en ce qu'**une source de chaleur ou un dissipateur de chaleur est couplé au dispositif d'homogénéisation de telle sorte qu'il soit possible de générer un courant de fluide passant dans le canal d'écoulement principal.
